# EUROPEAN PATENT APPLICATION

(11) **EP 2 824 788 A1**
(43) Date of publication of application: **14.01.2015**
(21) Application number: 13757312.7
(22) Date of filing: 08.03.2013
(51) Int. Cl.: H02J 3/01, H01F 27/24

(54) **SINGLE-CORE SELF-COUPLED INDUCTOR DEVICE**

(30) Priority: 08.03.2012 ES 201230342
(71) Applicant: Torytrans S.L., 13270 Ciudad Real (ES)
(72) Inventor: CAMBRONERO GARCIA, José, E-13270 Ciudad Real (ES)
(74) Representative: Carvajal y Urquijo, Isabel
(86) International application number: PCT/ES2013/070147
(87) International publication number: WO 2013/132131

(57) **Abstract**

Single-core self-coupled inductor that offers an advantageous distribution of gaps (3) for controlling and modifying the leakage of the magnetic flux, with at least one primary inlet inductance (11) self-coupled to a primary outlet inductance (12) and an adjacent secondary inductance (13). There is a magnetic core (2) composed of primary columns (22), a secondary column (24), an upper primary yoke (21), a lower secondary yoke (25) and a central common yoke (23).

## Description

### Technical field of the invention

The invention relates to an single-core self-coupled inductor device that offers a novel magnetic geometry and winding arrangement and an advantageous distribution of gaps.

### Background art

It is a known fact that an inductance comprises a coil that is wound around a core that has a series of gaps. The gaps modify the leakage of the magnetic flux, mainly in order to obtain a desired inductance value.

In many applications, for example band-pass, band-stop, low-pass and high-pass filters, it is necessary to connect several inductances together according to their type (L-C, L-C-L, L-LC-L, etc.). The connection is made component by component and often means that some components affect the operations of others. Effects such as common mode attenuation caused by mutual inductance must be taken into account in this type of application. In addition, connecting several inductances together generates a considerable increase in size, cost and energy inefficiency.

Depending on whether single-phase, two-phase or three-phase has been installed, this problem may also be aggravated by the fact that each phase needs its own associated set of components.

Document US6127743 describes, component by component, a harmonic mitigating device for three-phase power distribution systems, having three inductances, two of which are primary (one input and one output) and another secondary inductance in tune with one capacitor per phase.

The present invention offers the same performance but integrates the three inductances into just one single-core self-coupled inductor device. For this purpose, it was necessary to analyze the geometry of the magnetic core, the arrangement of the windings and the dimensions of the gaps, in order to control the leakage of the magnetic flux between the inductances.

### Summary of the invention

The present invention resolves the problems detected in the state of the art by means of the characteristics found in the independent claim. Particular or advantageous embodiments are presented in the dependent claims.

The object of the invention is a single-core self-coupled inductor, which makes it possible to substitute the primary inlet inductance and the primary outlet inductance of each phase with one primary self-coupled inductance and the secondary inductance is integrated, sharing a portion of the magnetic core of the primary self-coupled inductance, providing a single inductor device with the three necessary inductances.

The advantages of using a single-core self-coupled inductor device as opposed to conventional inductances are, among others:
- Increase in the series impedance of the filter caused by the self-coupled inductance. One self-coupled inductance offers approximately 4 times more impedance than two conventional inductances in series. This fact raises the filtering capacity to the second power, which is very important especially at low load currents.
- Common-mode attenuation of the components caused by the primary mutual inductance.
- Greater filtering and attenuation of the harmonic currents injected by the converter.
- Smaller number of external electrical connections.
- Smaller size and lower cost.
- Higher performance and energy efficiency.
- In is cheaper in economic terms, since it has a single core with three windings.
There is a savings of two whole cores as compared to building three conventional inductances with three cores and three windings.

However, the use of a single-core self-coupled inductor device brings with it problems as well, such as how to ensure that the impedance is shared out as needed for correct tuning of the filter. The magnetic flux must also be distributed properly in order to prevent unwanted saturation of the device.

In order to make the various inductances behave the same as they would individually, a novel and specific geometry had to be devised for the magnetic core, alongside a suitable arrangement of the windings and a special distribution of the gaps. As a result of the research carried out, it was found that by distributing the gaps of the core it is possible to selectively conduct or disperse the magnetic flux and, for example, to make the induction take place in the desired coil. The number of gaps and their thickness therefore has a significant influence in terms of achieving integration in a single component.

Various types of core are compatible with the above solution: three-phase, two-phase "UI", single-phase "EI", in accordance with the type of filter required for three-phase, two-phase and single-phase filter systems, respectively.

### Brief description of the drawings

What follows is a non-limiting presentation of an exemplary embodiment according to the invention, for the purpose of clarification:
Fig. 1 - Shows a schematic representation of the single-core self-coupled inductor device, specifically for a three-phase "EI" filter according to the present invention.
Fig. 2 - Shows the geometry of the magnetic core and the specific distribution of the gaps for the topology represented in figure 1 above.
Fig. 3 - Schematic application of the invention in three-phase current harmonics absorption filters, for 6-pulse three-phase converters such as rectifiers, speed variators for motors, uninterrupted power supplies, three-phase supply sources, etc.

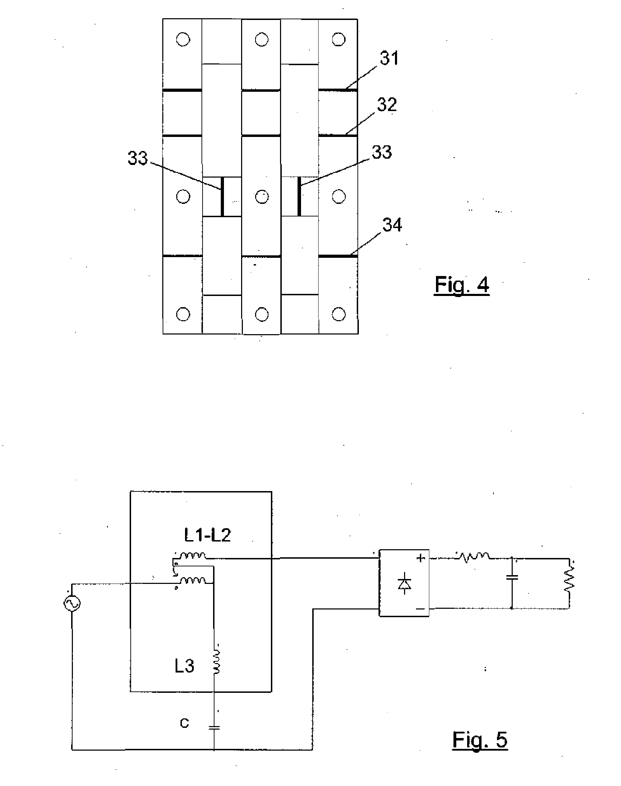

Fig. 4 - Shows the geometry of the magnetic core and the specific distribution of the gaps for three-phase current harmonics absorption filters for 6-pulse three-phase converters with three-phase "EI" magnetic cores, using another distribution of the gaps that is suitable for obtaining the same required results. It is an alternative to the one represented in figure 2, with the same performance.
Fig. 5 - Schematic application of the invention for current harmonics absorption filters for single-phase and two-phase converters, such as electronic ballasts for discharge lighting (fluorescent, halogen gas, etc.) and energy-efficient lighting (LED-type), rectifier bridges, speed variators for motors, uninterrupted power supplies, supply sources, etc.

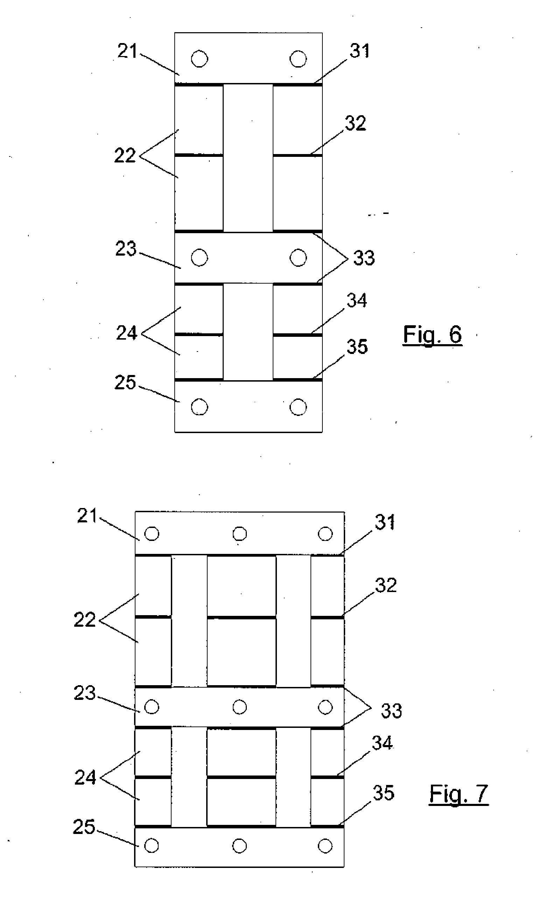

Fig. 6 - Shows the geometry of the magnetic core and the specific distribution of the gaps for current harmonics absorption filters for two-phase converters with two-phase "UI" magnetic cores.
Fig. 7 - Shows the geometry of the magnetic core and the specific distribution of the gaps for current harmonics absorption filters for single-phase converters with single-phase "EI" magnetic cores.

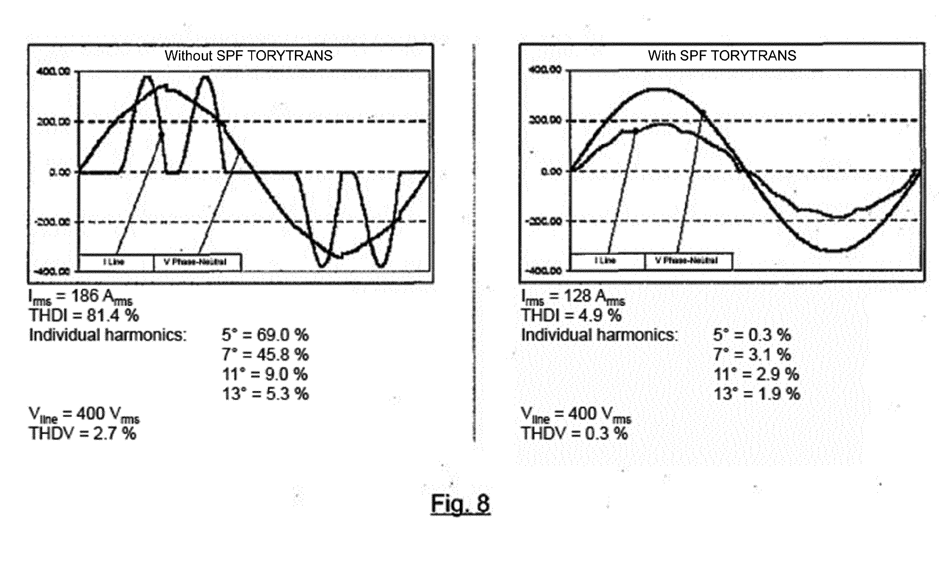

Fig. 8 - Results obtained in the waveforms of voltage and current absorbed from the grid, for an exemplary three-phase harmonics filter for a 6-pulse converter that supplies a 75 kW motor, wherein the considerable reduction in harmonics obtained may be observed.

### Detailed description of the invention

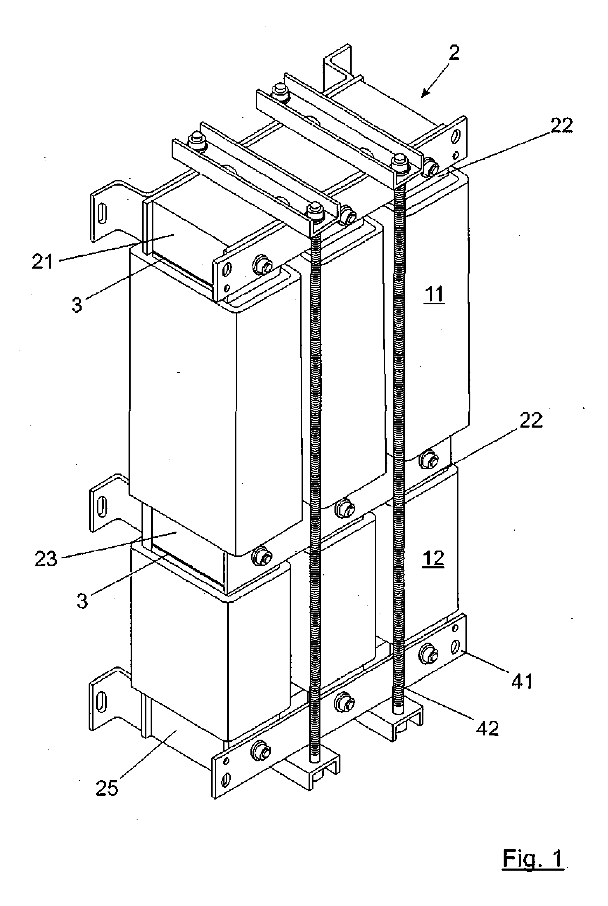

As may be observed in fig. 1, the self-coupled inductor device encompasses all of the necessary inductances in a single element. Specifically, in the primary columns is where the coils of the primary inlet inductance (11) are located, which are wound concentrically and are therefore self-coupled with the coils of the primary outlet inductance (12). In the secondary columns the coils of the secondary inductance (13) are located, which do not share magnetic coupling with the primary coils. The single magnetic core (2) has also been represented, and a distributed gap (3), both of which are shown in greater detail in the next figure.

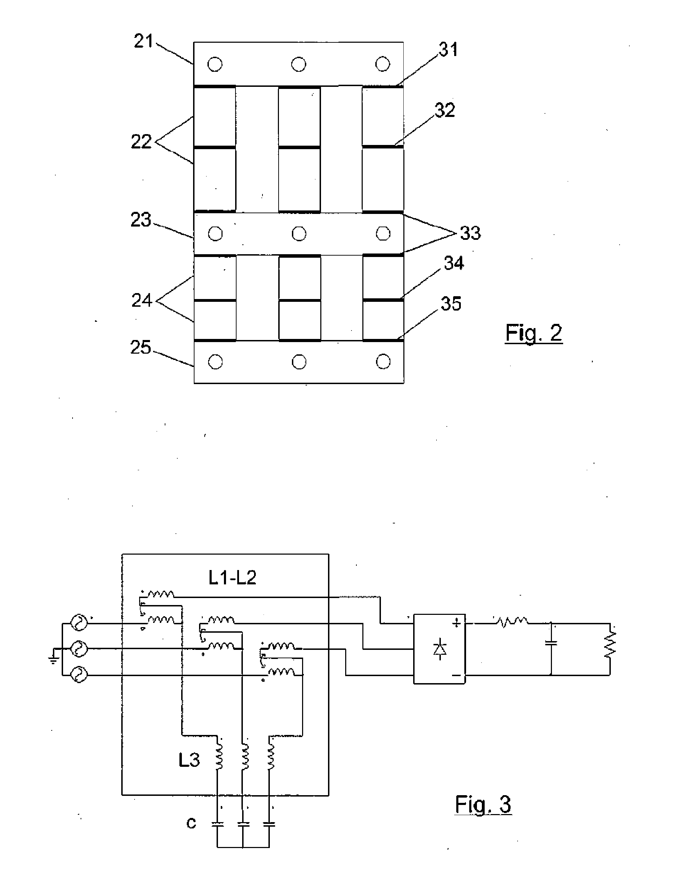

Fig. 2 shows the geometry of the single magnetic core for conducting flux, which is made up of the upper yoke (21), which closes the magnetic flux of the primary columns (22) of the windings of the primary self-coupled inlet and outlet inductances, the central common yoke (23) that closes the flux of the primary and secondary inductances, the secondary columns (24) of the windings of the secondary inductance and the lower yoke (25), which closes the magnetic flux of the secondary inductance.

For selectively distributing magnetic flux as needed, fig. 2 also shows the distribution of the gaps that create the necessary leakage for each inductance, depending on their thickness: the upper head gaps (31) for controlling the leakage between the upper yoke (21) and the primary columns (22), the primary column gaps (32) for controlling the leakage of the primary coils (11 and 12), the central yoke (23) gaps (33) for controlling the leakage between primary (22) and secondary columns (24), the secondary column gaps (34) for controlling the leakage of the secondary coil (13) and the lower head gap (35) for controlling the leakage between the secondary columns (24) and the lower yoke (25).

### Legend:

SPF = stands for the "passive harmonics filter" system, topology of Fig. 3
Irms = Real power of the line, expressed in amperes
Vrms = Real voltage of the line, expressed in volts
THD I = Rate of harmonic distortion of the power, expressed as a %
THD V = Rate of harmonic distortion of the voltage, expressed as a %

### Numeric references:

11 primary inlet or upper inductance,
12 primary outlet or lower inductance,
13 secondary inductance,
2 single magnetic core,
3 gap,
21 upper yoke,
22 primary columns,
23 central yoke,
24 secondary columns,
25 lower yoke,
31 upper gaps,
32 primary gaps,
33 central gaps,
34 secondary gaps,
41 fastening plates,
42 fastening braces.

## Claims

1. A single-core self-coupled inductor device, comprising:
- a plurality of inductances with at least one primary inlet inductance (11) self-coupled to a primary outlet inductance (12) and an adjacent secondary inductance (13);
- one magnetic core (2) composed of primary columns (22), a secondary column (24), an upper primary yoke (21), a lower secondary yoke (25) and a central common yoke (23);
- a specific distribution of several gaps (3) to control and modify the leakage of the magnetic flux.

2. The inductor device according to claim 1, **characterized in that** at least one of the gaps (32, 34) is distributed uniformly along the at least one corresponding column (22, 24) thereof.

3. The inductor device according to claim 1 or 2, **characterized in that** it further comprises upper head gaps (31) and lower head gaps (35) that control the leakage of the flux of the primary columns (22) and secondary columns (24), respectively. The central yoke gaps (33) control the common leakage flux of the primary columns (22) and secondary columns (24).

4. The inductor device according to claim 3, **characterized in that** the thickness of the upper head gaps (31), central yoke gaps (33) and lower head gaps (35) is equal to or less than that of the column gaps (32) and (34).
